# EUROPÄISCHE PATENTSCHRIFT

(11) **EP 1 501 702 B1**
(45) Veröffentlichungstag und Bekanntmachung des Hinweises auf die Patenterteilung: **07.06.2006**
(21) Anmeldenummer: 03727268.9
(22) Anmeldetag: 25.03.2003
(51) Int. Cl.: B60R 5/04, B60P 1/02

(54) **LADEBODEN FÜR EIN FAHRZEUG UND BELADEVORRICHTUNG**
LOADING BASE FOR A VEHICLE AND LOADING DEVICE
PLANCHER DE CHARGEMENT POUR UN VEHICULE ET DISPOSITIF DE CHARGEMENT

(30) Priorität: 25.03.2002 DE 10213307
(43) Veröffentlichungstag der Anmeldung: 02.02.2005
(73) Patentinhaber: Faurecia Innenraum Systeme GmbH, 76767 Hagenbach (DE)
(72) Erfinder: NICK, Albrecht, 38550 Isenbüttel (DE); THOMA, Wulf, 38518 Gifhorn (DE); SCHWARZ, Werner, 76865 Insheim (DE)
(74) Vertreter: Richardt, Markus Albert
(86) Internationale Anmeldenummer: PCT/EP2003/003072
(87) Internationale Veröffentlichungsnummer: WO 2003/080394

(56) Entgegenhaltungen:
- DE-A- 10 037 702
- DE-A- 19 815 466

## Beschreibung

Die Erfindung betrifft einen Ladeboden für ein Fahrzeug nach dem Oberbegriff von Patentanspruch 1 und eine Beladevorrichtung nach dem Oberbegriff von Patentanspruch 11.

Aus dem Stand der Technik sind verschiedene ausziehbare Ladeböden und Beladevorrichtungen bekannt. Aus der DE-OS 23 02 972 ist eine ausziehbare Ladefläche für Kombifahrzeuge bekannt. Hierbei sind auf der Ladefläche des Fahrzeugs Führungsschienen angeordnet. Die ausziehbare Ladefläche wird auf diese Führungsschienen aufgebracht und kann auf den Führungsschienen auf Rollen bewegt werden. Das Ladegut kann auf die ausgefahrene Ladefläche gesetzt und dann in den Laderaum des Fahrzeugs eingefahren werden.

Aus der DE 296 08 955 U1 ist eine Beladevorrichtung für Pkws oder Transporter bekannt. Diese Beladevorrichtung besteht aus einer Führungseinheit, die am Boden des Laderaums des Fahrzeugs montiert wird. Auf der Führungseinheit befindet sich eine verschiebbare Ladeplatte, die aus einer Transportposition innerhalb des Laderaums in eine Belade- oder Entladeposition bewegbar ist, in der die Ladeplatte sich außerhalb des Fahrzeugs hinter dem Fahrzeugheck befindet.

Aus der DE 196 19 126 A1 ist eine Beladeeinrichtung an einem Kraftfahrzeug mit einer schwenkbaren Heckklappe bekannt. In einem hinteren von der Heckklappe verschließbaren Laderaum des Kraftfahrzeugs sind an beiden Seiten des Bodens des Laderaums befestigte Führungsschienen vorgesehen, die in Fahrzeuglängsrichtung verlaufen. Zum Beladen ist es erforderlich, dass eine Heckklappe des Fahrzeugs um eine untere Fahrzeugquerachse nach hinten in eine horizontale Beladestellung geschwenkt wird.

Aus der DE 197 49 158 C2 ist ein Ladeboden für den Laderaum eines Fahrzeugs bekannt. Der Ladeboden ist auf Rollen gelagert und zum Teil etwa parallel zum Fahrzeugboden aus dem Laderaum ausfahrbar. Quer zur Fahrtrichtung weist der Ladeboden eine Sollknickstelle zur Verbesserung des Crash-Verhaltens auf.

Aus der DE 197 31 324 A1 ist ein ausziehbarer Ladeboden für ein Fahrzeug bekannt, der über Laufrollen entlang von Stützschienen verlagerbar ist. Mit dem Fahrzeugkörper sind die Stützschienen dabei so verbunden, dass sie in der Höhe verstellbar sind. Die Höhenverstellung erfolgt über zwei Parallelogramm-Lenker unter Zuhilfenahme eines Verstellzylinders.

Ein weiterer etwa parallel zum Fahrzeugboden auf Führungsschienen aus dem Laderaum ausfahrbarer Ladeboden ist aus der US 3,132,755 bekannt.

Aus der DE 198 15 466 A1 ist ein Beladegerät mit einem Antrieb bekannt.

Ausfahrbare Ladeböden und Beladevorrichtungen der genannten Art ermöglichen ein wesentlich vereinfachtes Be- und Entladen des Fahrzeugs durch Auflegen der Fracht auf den rollfähigen Ladeboden. Auf den ausgefahrenen Ladeboden wird dabei eine Last aufgelegt, die mit geringem Kraftaufwand mit dem Ladeboden in das Fahrzeuginnere geschoben werden kann.

Aus der DE 100 37 702 A1, von der die vorliegende Erfindung als nächst kommenden Stand der Technik ausgeht, ist ein gattungsgemäßer Ladeboden bekannt, der das Hineinlegen und Herausnehmen von Gegenständen in ein in einem Kofferraum vorgesehenes Fach bzw. aus diesem erleichtert. Ein Kasten ist an einer Bodenfläche des Kofferraums befestigt. Ein erster vorstehender Eingriffsabschnitt und ein zweiter vorstehender Eingriffsabschnitt des Faches stehen mit einer ersten Führungsnut und einem Ankerloch des Kastens jeweils in Eingriff, um das Fach in dem Kasten zu halten. Ein Nachteil bei diesem vorbekannten Kraftfahrzeug-Kofferraumaufbau ist, dass dieser nur manuell zu betätigen ist.

Der Erfindung liegt daher die Aufgabe zu Grunde einen verbesserten Ladeboden und eine verbesserte Beladevorrichtung für ein Fahrzeug, insbesondere für ein Kraftfahrzeug mit Heckklappe, zu schaffen.

Die der Erfindung zu Grunde liegende Aufgabe wird vorzugsweise mit den Merkmalen des unabhängigen Patentanspruchs 1 gelöst. Bevorzugte Ausführungsformen der Erfindung sind in den abhängigen Patentansprüche angegeben.

Ein besonderer Vorteil der Erfindung ist, dass der Ladenutzraum nicht oder nur unwesentlich durch den anhebbaren und ausziehbaren Ladeboden und die entsprechende Beladevorrichtung verkleinert wird. Nach einer bevorzugten Ausführungsform der Erfindung wird dies so erreicht, dass die Führungselemente für den Ladeboden in den Seitenwänden des Laderaums angeordnet sind. Vorzugsweise handelt es sich hierbei um Kulissenführungen für entsprechende seitlich an dem Ladeboden angeordnete Laufrollen.
Von besonderem Vorteil ist dabei, dass die Führungselemente im Wesentlichen seitlich an dem Ladeboden bzw. oberhalb des Fahrzeugbodens angeordnet sind, so dass der Laderaum nicht oder nicht wesentlich verkleinert wird.

Nach einer bevorzugten Ausführungsform der Erfindung sind die Kulissenführungen in den Seitenwänden des Laderaums so ausgebildet, dass Abschnitte der Kulissenführung im Wesentlichen zum Anheben des Ladebodens und andere Abschnitte der Kulissenführung im Wesentlichen zum Herausziehen des Ladebodens ausgebildet sind.

Nach einer weiteren bevorzugten Ausführungsform der Erfindung sind an dem Ladeboden zwei Achsen mit je zwei Laufrollen angeordnet. Im eingefahrenen Zustand des Ladebodens greifen die Laufrollen einer Achse jeweils in einen Abschnitt der Kulissenführung, der zum Anheben dient, ein. Dieser Kulissenabschnitt ist kurvenförmig ausgebildet, so dass die Laufrollen auf der Anstiegsflanke des betreffenden Kulissenabschnitts den Ladeboden nach oben heben können.

Der Ladeboden kann durch Muskelkraft betätigt werden Hierzu ist in einem vorderen Bereich des Ladebodens ein Griff angeordnet, über den ein Benutzer eine Zugkraft einleiten kann, aufgrund derer der Ladeboden entlang der Kulissenführung angehoben und dann herausgezogen wird.

Gemäß der Erfindung ist ein Antrieb für die Betätigung des Ladebodens vorgesehen. Hierbei kann es sich um einen auf Federkraft beruhenden mechanischen Antrieb oder um einen elektromechanischen Antrieb handeln. Im letzteren Fall ist vorzugsweise an oder in dem Ladeboden zumindest ein elektrischer Antrieb vorgesehen, der eine oder beide Laufrollenachsen antreibt. In diesem Fall sind vorzugsweise zumindest auf den Anstiegsflanken der betreffenden Kulissenabschnitte kurvenförmige Zahnstangen angeordnet, in die auf den angetriebenen Achsen befindliche Antriebselemente wie z.B. Zahnräder eingreifen können.

Alternativ oder zusätzlich kann auch ein pneumatischer oder hydraulischer Antrieb für die Betätigung der Ladebodens vorgesehen sein.

Nach einer weiteren bevorzugten Ausführungsform wird der Ladeboden zum Ausfahren um ca. 20 bis 80 mm, vorzugsweise 40 bis 60 mm angehoben, wobei der Ladeboden eine kurvenförmige Bewegung beschreibt. Danach geht die Bewegung des Ladebodens in eine translatorische Ausschubbewegung über. Vorzugsweise wird der Ladeboden dabei um ca. 2/6 bis 5/6, vorzugsweise ca. 2/3 seiner Länge aus dem Laderaum ausgeschoben.

Vorzugsweise sind die Kulissenabschnitte für das Anheben des Ladebodens um das ca. 0,2 bis 0,4 fache der Länge des Ladebodens voneinander beabstandet.

Nach einer weiteren bevorzugten Ausführungsform der Erfindung ist eine lösbare Arretiervorrichtung vorgesehen, um den Ladeboden im ausgefahrenen Zustand lösbar zu arretieren. Dies ist für ein sicheres Beladen des ausgezogenen Ladebodens besonders vorteilhaft. Nach Beendigung des Ladevorgangs wird die Arretierung gelöst, so dass der Ladeboden wieder einfahren kann.

Nach einer weiteren bevorzugten Ausführungsform der Erfindung ist die Arretiervorrichtung im Bereich einer Ladekante des Fahrzeugs angeordnet. Beispielsweise befindet sich an der Ladekante ein Rastelement, welches in ein entsprechendes Element an der Unterseite des Ladebodens eingreift, sobald dieses das Rastelement beim Herausziehen des Ladebodens passiert.

Nach einer weiteren bevorzugten Ausführungsform der Erfindung ist der Ladeboden anhebbar, sobald das erste Paar Laufrollen aus dem hinteren Ende der Kulissenführung ausgefahren ist. Beispielsweise kann ein Benutzer den Ladeboden dann leicht anheben, um eine Ausnehmung in der Unterseite des Ladebodens über ein Arretierelement der Ladekante zu bringen. Nach Beladen des Ladebodens kann das Arretierelement gelöst werden, so dass der Ladeboden in den Laderaum zurückfahren kann.

Nach einer weiteren bevorzugten Ausführungsform der Erfindung sind die Kulissenführungen über die hintere Begrenzung des Fahrzeugs hinaus verlängerbar. Hierzu kann in dem geraden Teil der Kulissenführung ein verschiebbares Profil angeordnet sein, welches bei der Ausfahrbewegung des Ladebodens teleskopartig mit ausfährt.

Nach einer weiteren bevorzugten Ausführungsform der Erfindung kann der Ladeboden voll automatisch ausgefahren werden. Hierzu betätigt ein Benutzer eine entsprechende Fernbedienung oder ein Betätigungselement an der Instrumententafel. Daraufhin wird automatisch die Heckklappe geöffnet und der Ladeboden fährt aus.

Im Weiteren werden bevorzugte Ausführungsformen der Erfindung mit Bezugnahme auf die Zeichnungen näher erläutert. Es zeigen:
- Figur 1: eine Ansicht der Erfindung mit einer Kulissenführung in den Seitenwänden des Laderaums,
- Figur 2: eine Ansicht von unten auf eine Ausführungsform des erfindungsgemäßen Ladebodens zur Verwendung mit der Beladevorrichtung der Figur 1,
- Figur 3: die Beladevorrichtung der Figur 1 mit eingebauten Ladeboden in eingefahrenem Zustand,
- Figur 4: die Beladevorrichtung der Figur 1 mit Ladeboden in ausgefahrenem Zustand,
- Figur 5: eine Ausführungsform einer Laufrolle des Ladebodens mit einem Zahnrad als Antriebselement,
- Figur 6: eine zweite bevorzugte Ausführungsform der Erfindung mit einem Arretierelement an der Ladekante des Laderaums.

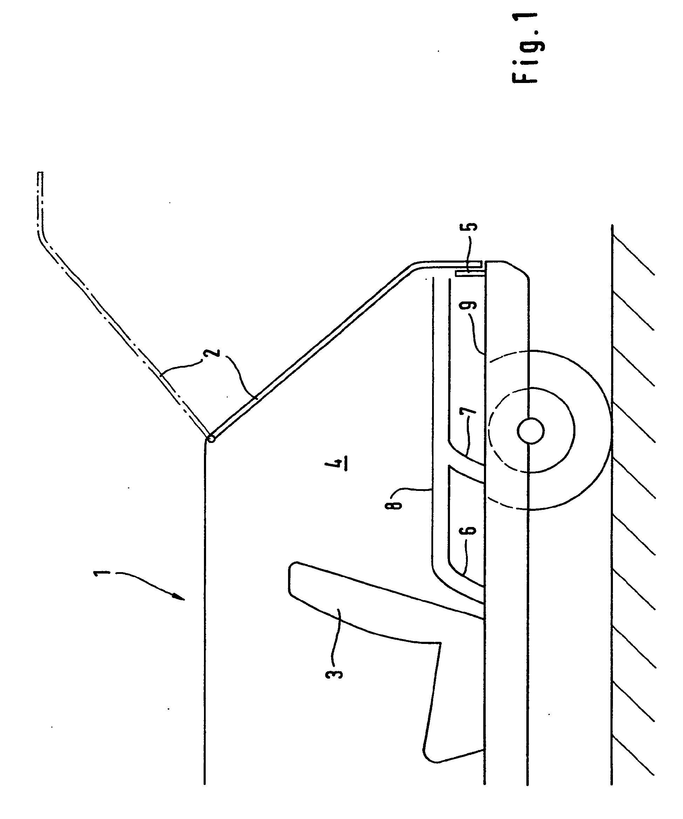

Die Figur 1 zeigt ein Fahrzeug 1 mit einer Heckklappe 2. Hinter den Rücksitzen 3 befindet sich ein Laderaum 4. Nach hinten wird der Laderaum 4 vorzugsweise durch eine Ladekante 5 begrenzt. Die Ladekante 5 hat den Vorteil, dass sie der Karosserie des Fahrzeugs 1 eine vergrößerte Stabilität verleiht.

In den beiden Seitenwänden des Fahrzeugs 1 ist im Bereich des Laderaums 4 jeweils eine Kulissenführung angeordnet. Die Kulissenführungen bestehen jeweils aus den kurvenförmigen Abschnitten 6 und 7 sowie den geraden Abschnitten 8. Die durch die Abschnitte 6, 7 und 8 gebildete Kulissenführung dient zur Aufnahme von entsprechenden Laufrollen eines Ladebodens.

Die Abschnitte 6 und 7 der Kulissenführung reichen dabei bis auf den Fahrzeugboden 9 oder bis knapp über den Fahrzeugboden 9, sodass der Ladeboden unmittelbar auf dem Fahrzeugboden 9 aufliegen kann. Aufgrund dessen geht kein Laderaum 4 im Vergleich zu dem Fahrzeug 1 ohne anhebbaren und herausziehbaren Ladeboden verloren.

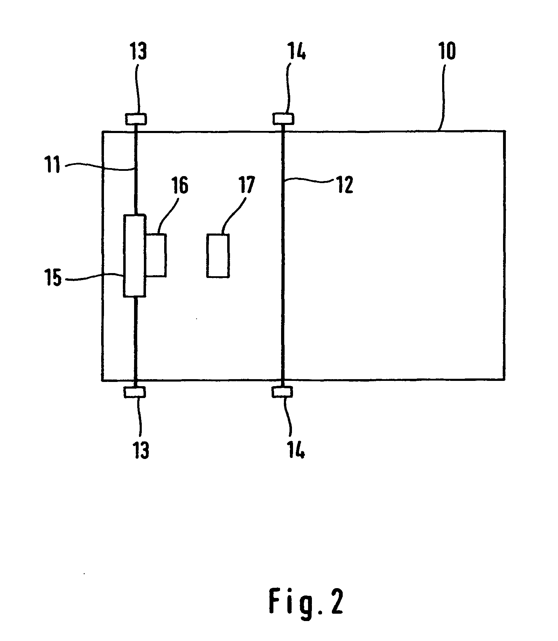

Die Figur 2 zeigt eine Ausführungsform eines Ladebodens 10 zur Verwendung für das Fahrzeug 1 der Figur 1. Der Ladeboden 10 wird beispielsweise durch eine kaschierte Schichtholzplatte, eine Kunststoffplatte, eine Sandwich- oder Wabenkonstruktion oder durch eine Platte aus Stahlblech gebildet. An dem Ladeboden 10 befinden sich die Achsen 11 und 12 an deren Enden sich jeweils Laufrollen 13 bzw. 14 befinden.

In dem gezeigten Ausführungsbeispiel der Figur 2 wird die Achse 11 durch einen Antrieb 15 angetrieben. Der Antrieb 15 ist dabei vorzugsweise flach ausgebildet und zumindest teilweise in den Ladeboden 10 integriert, so dass er nicht oder nur wenig über die untere Begrenzung des Ladebodens 10 hinausragt.

Für den Fall, dass der Antrieb 15 über die untere Begrenzung des Ladebodens 10 hinausragt, ist in dem Fahrzeugboden 9 (vgl. Figur 1) eine entsprechende Mulde zur Aufnahme des über die untere Begrenzung des Ladebodens 10 hinausragenden Abschnitts des Antriebs 15 vorgesehen, so dass der Ladeboden 10 auch in diesem Fall flach auf dem Fahrzeugboden 9 (vgl. Figur 1) aufliegen kann.

An dem Antrieb 15 ist ferner eine Eingabeeinheit 16 zur Eingabe eines Steuerungssignals für den Antrieb 15 vorgesehen. Durch die Eingabe eines entsprechenden Signals in die Eingabeeinheit 16 wird der Antrieb 15 eingeschaltet, um den Ladeboden 10 automatisch auszufahren.

Vorzugsweise handelt es sich bei dem Antrieb 15 um einen elektromechanischen Antrieb mit einem elektrischen Motor. Jedoch können auch andere Antriebsprinzipien, wie zum Beispiel mechanische, pneumatische oder hydraulische Antriebe zum Einsatz kommen.

An der Unterseite des Ladebodens 10 befindet sich ferner eine Ausnehmung 17, die zur Arretierung des Ladebodens in ausgefahrenem Zustand dient.

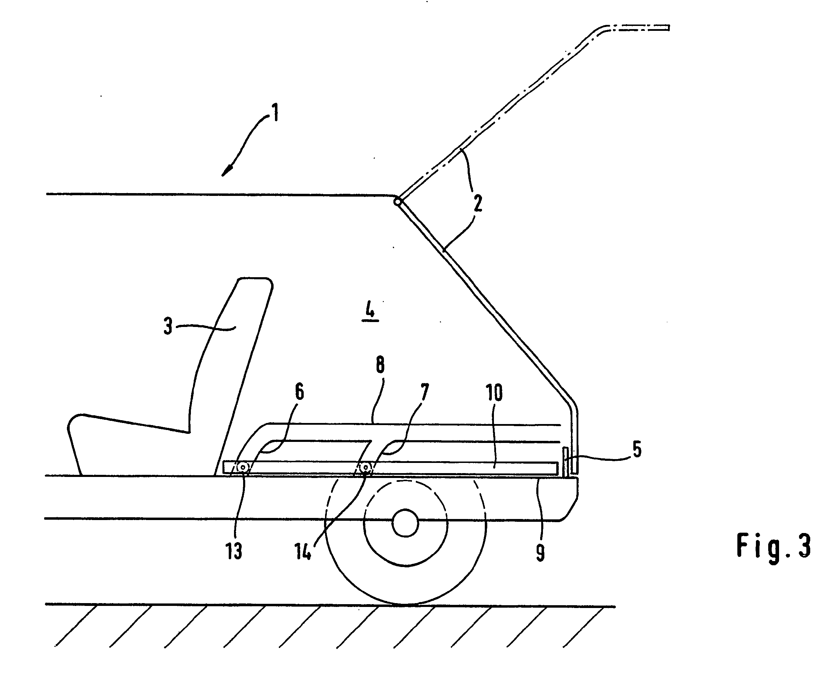

Die Figur 3 zeigt das Fahrzeug 1 der Figur 1 mit dem Ladeboden 10 der Figur 2 in eingefahrenem Zustand. Die Laufrollen 13 befinden sich dabei in den Abschnitten 6 der Kulissenführungen, während sich die Laufrollen 14 in den Abschnitten 7 der Kulissenführungen befinden.

Zum manuellen Herausziehen des Ladebodens 10 kann an dessen Oberseite ein herausklappbarer Griff angeordnet sein. In diesem Fall öffnet ein Benutzer zunächst die Heckklappe 2, klappt dann den Griff heraus und zieht den Ladeboden 10 entlang der Abschnitte 6 und 7 der Kulissenführungen in eine angehobene Position und dann entlang des Abschnitts 8 der Kulissenführungen zumindest teilweise aus dem Laderaum 4 heraus.

Vorzugsweise erfolgt das Herausfahren des Ladebodens 10 aus dem Laderaum 4 vollautomatisch. Hierzu betätigt der Benutzer ein Betätigungselement zum Beispiel auf der Fernbedienung, im Kofferraum oder an der Instrumententafel des Fahrzeugs 1. Daraufhin wird ein entsprechendes Signal erzeugt, welches dazu führt, dass zunächst in an sich bekannter Weise die Heckklappe 2 automatisch geöffnet wird, bevor der Antrieb 15 (vgl. Figur 2) über dessen Eingabeeinheit 16 aktiviert wird, um den Ladeboden 10 herauszufahren.

Das Herausfahren des Ladebodens 10 erfolgt dabei so, dass durch den Antrieb 15 über die Achse 11 in die Laufrollen 13 ein Moment eingeleitet wird. Alternativ ist es auch möglich an Stelle der Achse 11 die Achse 12 mit den Laufrollen 14 anzutreiben oder auch beide Achsen 11 und 12 anzutreiben.

Die Laufrollen 13 und 14 fahren dann aufgrund der Antriebskraft des Antriebs 15 entlang der Anstiegsflanken der Abschnitte 6 und 7 der Kulissenführungen aufwärts, um den Ladeboden 10 in seine angehobene Position zu bringen. Vorzugsweise wird der Ladeboden 10 dabei nur wenig angehoben, zum Beispiel zwischen 20 und 80 mm, vorzugsweise zwischen 40 und 60 mm. Sofern eine Ladekante 5 vorhanden ist, wird der Ladeboden 10 so angehoben, dass er sich oberhalb der Ladekante 5 befindet.

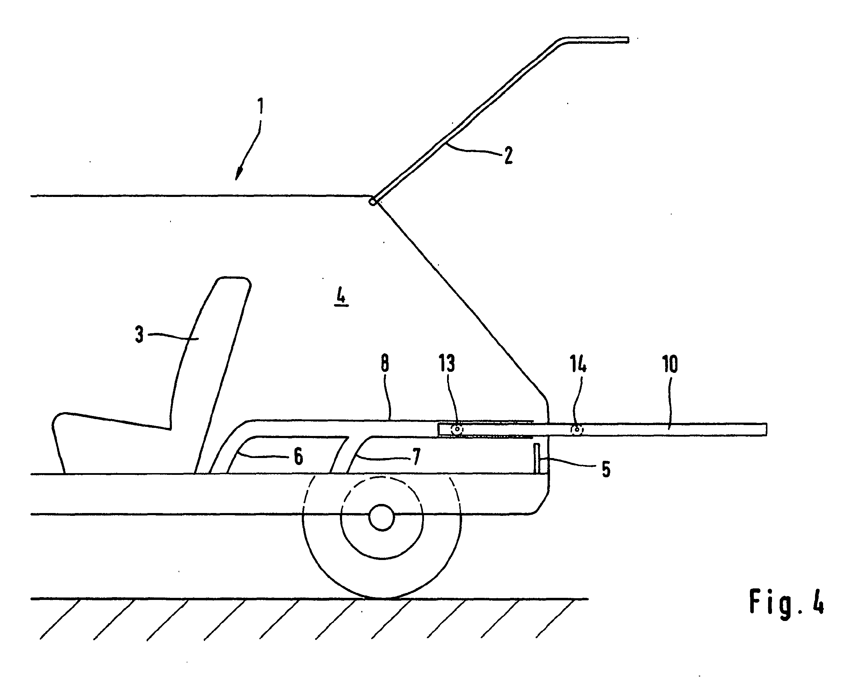

Die Figur 4 zeigt das Fahrzeug 1, nachdem der Ladeboden 10 ausgefahren worden ist. Die Laufrollen 13 befinden sich in dieser Position innerhalb der Abschnitte 8 der Kulissenführungen. Die Laufrollen 14 sind dagegen aus dem hinteren Ende des Abschnitts 8 der Kulissenführungen herausgefahren, so dass der Ladeboden 10 anhebbar ist. Wenn ein Benutzer den Ladeboden 10 anhebt, findet eine Bewegung um die Achse 11 (vgl. Figur 2) der Laufrollen 13 statt.

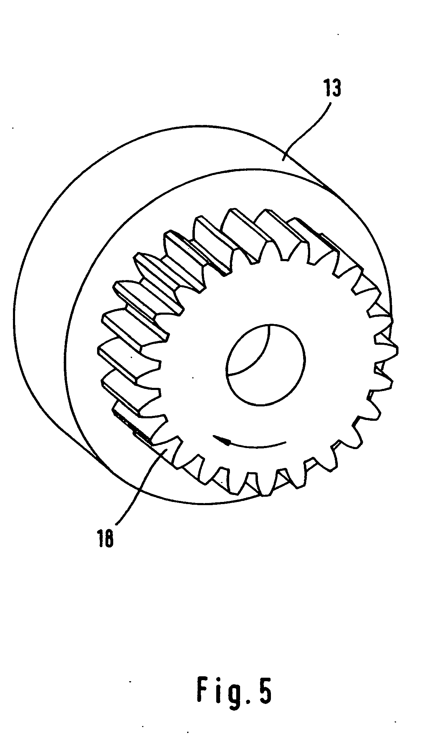

Die Figur 5 zeigt eine Ausführungsform der Laufrollen 13. An den Laufrollen 13 befindet sich jeweils ein Zahnrad 18. Die Zahnräder 18 dienen zum Eingreifen in kurvenförmige Zahnstangen, die jeweils an den Anstiegsflanken der Abschnitte 6 der Kulissenführungen angeordnet sind.

Durch Einschalten des Antriebs 15 wirkt über die Achse 11 ein Drehmoment auf die Zahnräder 18, so dass aufgrund des Eingreifens der Zahnräder 18 in die Zahnstangen der Anstiegsflanken der Abschnitte 6 eine Kraft zum Anheben des Ladebodens 10 auf die Ebene der Abschnitte 8 der Kulissenführungen resultiert. Anstelle von Zahnrädern 18 können auch andere form- oder kraftschlüssige Antriebselemente zur Übertragung des Drehmoments des Antriebs 15 vorgesehen sein.

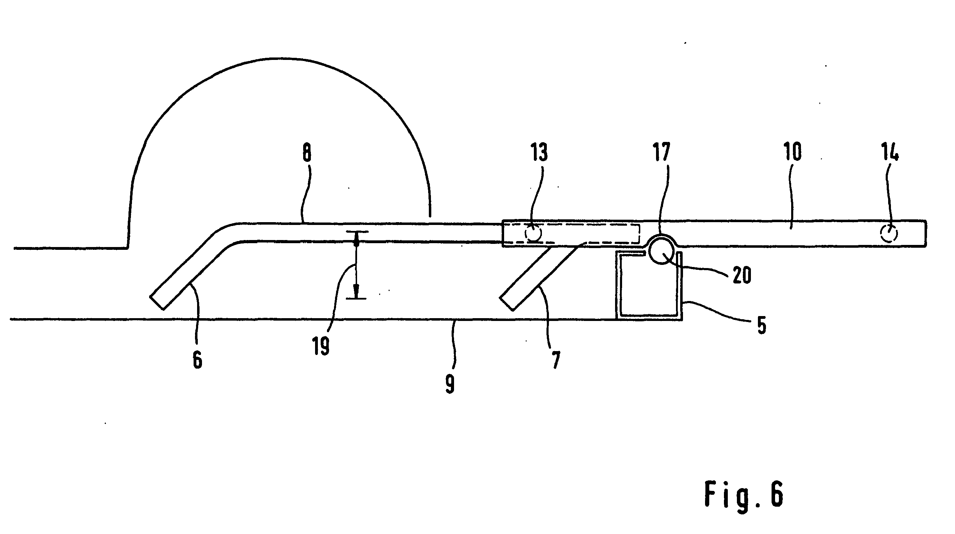

Die Figur 6 zeigt eine weitere bevorzugte Ausführungsform der Erfindung, wobei für Elemente, die Elementen der Figuren 1 bis 4 entsprechen, dieselben Bezugszeichen verwendet werden. In dieser Ausführungsform hat der Ladeboden 10 einen Hub 19 von ca. 40 mm, das heißt der Ladeboden 10 wird beim Ausfahren zunächst über die Abschnitte 6 und 7 der Kulissenführungen um den Hub 19 auf das Niveau der Abschnitte 8 der Kulissenführungen angehoben.

Beim Ausfahren des Ladebodens entlang des Abschnitts 8 der Kulissenführung überfährt der Ladeboden 10 ein Arretierelement 20. Das Arretierelement 20 ist beispielsweise auf einer Feder angeordnet und wird beim Herausfahren des Ladebodens 10 in die Ladekante 5 hineingedrückt. Sobald die Ausnehmung 17 in dem Ladeboden 10 die Ladekante 5 passiert, springt das Arretierelement 20 in die in der Figur 6 gezeigte Position, so dass der Ladeboden 10 mit der Ladekante 5 verrastet.

In dem gezeigten Ausführungsbeispiel hat der Ladeboden 10 eine Länge von ca. 1,2 bis 1,3 m und wird um ca. 600 mm über die Ladekante 5 hinaus über das Heck des Fahrzeugs ausgefahren. In dieser Position wird der Ladeboden 10 dann beladen. Nach Abschluss des Beladevorgangs des Ladebodens 10 wird das Arretierelement 20 gelöst. Dies kann zum Beispiel elektromechanisch durch Freigabe eines Hubmagneten oder dergleichen, welcher die Feder frei gibt, erfolgen. Der Ladeboden 10 wird dann manuell oder automatisch wieder in den Laderaum eingefahren.

### Bezugszeichenliste

- Fahrzeug: 1
- Heckklappe: 2
- Rücksitze: 3
- Laderaum: 4
- Ladekante: 5
- Abschnitt: 6
- Abschnitt: 7
- Abschnitt: 8
- Fahrzeugboden: 9
- Ladeboden: 10
- Achse: 11
- Achse: 12
- Laufrolle: 13
- Laufrolle: 14
- Antrieb: 15
- Eingabeeinheit: 16
- Ausnehmung: 17
- Zahnrad: 18
- Hub: 19
- Arretierelement: 20

## Patentansprüche

1. Ladeboden für ein Fahrzeug (1) mit ersten Führungselementen (13, 14) zum Eingriff in zweite Führungselemente (6, 7, 8) des Fahrzeugs zum Anheben und Herausziehen des Ladebodens (10), **wobei** die ersten Führungselemente im Wesentlichen seitlich an dem Ladeboden angeordnet sind, und wobei die ersten Führungselemente zum Eingriff in durch die zweiten Führungselemente gebildeten Kulissenführungen ausgebildet sind, wobei die ersten Führungselemente ein erstes Paar (13) und ein zweites Paar (14) von Kulissenelementen aufweisen, wobei die Kulissenelemente des ersten Paars zur Aufnahme in erste Kulissenabschnitte (6) der Kulissenführungen in dem Laderaum (4) des Fahrzeugs und die Kulissenelemente des zweiten Paars zur Aufnahme in zweite Kulissenabschnitte (7) der Kulissenführungen ausgebildet sind,
**gekennzeichnet durch**
einen Antrieb (15) für zumindest eines der ersten Führungselemente zum Anheben und / oder Herausschieben und / oder Einziehen und / oder Absenken des Ladebodens, wobei der Antrieb zumindest teilweise in den Ladeboden integriert ist und wobei zumindest eines der Kulissenelemente ein Antriebselement (18) aufweist.

2. Ladeboden nach Anspruch 1, mit einem Griff zum Anheben und Herausziehen des Ladebodens durch einen Benutzer.

3. Ladeboden nach Anspruch 1 oder 2, wobei es sich bei dem Antrieb um einen mechanischen, elektromechanischen, pneumatischen oder hydraulischen Antrieb handelt.

4. Ladeboden nach Anspruch 1, 2 oder 3, wobei das erste und /oder das zweite Paar von Kulissenelementen auf einer mit dem Antrieb verbundenen Welle (11) angeordnet sind.

5. Ladeboden nach einem der vorhergehenden Ansprüche, wobei es sich bei dem Antriebselement um ein Zahnrad handelt.

6. Ladeboden nach einem der vorhergehenden Ansprüche, wobei das erste Paar von Kulissenelementen und das zweite Paar von Kulissenelementen um einen Betrag von etwa 0,2 bis 0,4 der Länge des Ladebodens in Ausziehrichtung beabstandet sind.

7. Beladevorrichtung für ein Fahrzeug (1) mit einem Laderaum (4), mit zwei Seitenwänden zur Begrenzung des Laderaums und mit einem Ladeboden (10) nach einem der vorhergehenden Ansprüche 1 bis 6, und mit Führungselementen (6, 7, 8) zum Anheben und Herausziehen des Ladebodens (10).

8. Beladevorrichtung nach Anspruch 7, wobei die Führungselemente an oder in den Seitenwänden so angeordnet sind, dass sie sich bei eingefahrenem Ladeboden im Wesentlichen oberhalb der Unterseite des Ladebodens befinden.

9. Beladevorrichtung nach Anspruch 7 oder 8, wobei durch die Führungselemente jeweils eine Kulissenführung (6, 7, 8) in den Seitenwänden gebildet wird.

10. Beladevorrichtung nach Anspruch 9, wobei die Kulissenführungen erste Kulissenabschnitte (6) zur Aufnahme eines ersten Paars (13) von Kulissenelementen des Ladebodens und zweite Kulissenabschnitte (7) zur Aufnahme eines zweiten Paars (14) von Kulissenelementen des Ladebodens und dritte Kulissenabschnitte (8) zur Aufnahme des ersten und des zweiten Paars von Kulissenelementen aufweist, wobei die ersten und zweiten Kulissenabschnitte im Wesentlichen zum Anheben des Ladebodens dienen und der dritte Kulissenabschnitt im Wesentlichen zum Ausziehen des Ladebodens dient.

11. Beladevorrichtung nach Anspruch 10, wobei die ersten und zweiten Kulissenabschnitte um etwa das 0,2 bis 0,4fache der Länge des Ladebodens voneinander beabstandet sind.

12. Beladevorrichtung nach Anspruch 10 oder 11, wobei zumindest einer der ersten und / oder zweiten Kulissenabschnitte einen Bereich mit einer Zahnstange aufweist

13. Beladevorrichtung nach einem der vorhergehenden Ansprüche 7 bis 12 mit Mitteln (20) zum lösbaren Arretieren des Ladebodens in seiner ausgezogenen Position.

14. Beladevorrichtung nach Anspruch 13, wobei die Mittel zum lösbaren Arretieren an einer Ladekante (5) angeordnet sind.

## Claims

1. Loading base for a vehicle (1) with first guide elements (13, 14) for engaging in second guide elements (6, 7, 8) of the vehicle for lifting and pulling out the loading base (10), **in which** the first guide elements are arranged essentially sideways to the loading base, and in which the first guide elements are made for engaging in slide guides formed by the second guide elements, in which the first guide elements have a first pair (13) and a second pair (14) of slide elements, in which the slide elements of the first pair are made for taking up in first slide sections (6) of the slide guides in the loading area (4) of the vehicle and the slide elements of the second pair for taking up in second slide sections (7) of the slide guides
**characterised by**
a drive (15) for at least one of the first guide elements for lifting and / or pushing out and / or pulling in and / or lowering the loading base, in which the drive is at least partly integrated into the loading base, in which at least one of the slide elements has a drive element (18).

2. Loading base according to claim 1 with a handle for lifting and pulling out the loading base by a user.

3. Loading base according to claim 1 or 2, in which the drive is a mechanical, electromechanical, pneumatic or hydraulic drive.

4. Loading base according to claim 1, 2 or 3, in which the first and / or the second pair of slide elements are arranged on a shaft (11) connected to the drive.

5. Loading base according to one of the previous claims, in which the drive element is a toothed wheel.

6. Loading base according to one of the previous claims, in which the first pair of slide elements and the second pair of slide elements are at a distance of about 0.2 to 0.4 the length of the loading base in the pulling out direction.

7. Loading device for a vehicle (1) with a loading area (4) with two side walls for limiting the loading area and a loading base (10) according to one of the previous claims 1 to 6 and with guide elements (6, 7, 8) for lifting and pulling out the loading base (10).

8. Loading device according to claim 7, in which the guide elements are arranged on or in the side walls so that they are essentially above the bottom of the loading base when the loading base has been run in.

9. Loading device according to claim 7 or 8, in which a slide guide (6, 7, 8) is formed in the side walls by the guide elements.

10. Loading device according to claim 9, in which the slide guides have first slide sections (6) for taking a first pair (13) of slide elements of the loading base and second slide sections (7) for taking a second pair (14) of slide elements of the loading base and third slide sections (8) for taking the first and second pair of slide elements, in which the first and second slide sections are used essentially for lifting the loading base and the third slide section is used essentially for pulling out the loading base.

11. Loading device according to claim 9, in which the first and second slide sections are at a distance from each other by about 0.2 to 0.4 times the length of the loading base.

12. Loading device according to claim 10 or 11, in which at least one of the first and / or second slide sections has an area with a toothed rack.

13. Loading device according to one of the previous claims 7 to 12 with means (20) for detachably locking the loading base in its pulled out position.

14. Loading device according to claim 13, in which the means for detachably locking are arranged on a loading edge (5).

## Revendications

1. Surface de chargement pour un véhicule automobile (1) avec des premiers éléments de conduite (13, 14) qui pénètrent dans les deuxièmes éléments de conduite (6, 7, 8) du véhicule automobile pour lever et retirer la surface de chargement (10) ; les premiers éléments de conduite étant disposés essentiellement de manière latérale par rapport à la surface de chargement, et où les premiers éléments de conduite sont formés pour pénétrer dans les conduites à coulisses formées par les deuxièmes éléments de conduite, où les premiers éléments de conduite présentent une première paire (13) et une deuxième paire (14) d'éléments de coulisse, où les éléments de coulisse de la première paire sont formés pour la réception dans la première section de coulisse (6) des conduites à coulisses dans la chambre de chargement (4) du véhicule automobile et les éléments de coulisse de la deuxième paire sont formés pour la réception dans la deuxième section de coulisse (7) ; où au moins un des éléments de coulisse présente un élément d'entraînement (18).

2. Surface de chargement selon la revendication 1, avec une poignée pour lever et retirer la surface de chargement par un utilisateur.

3. Surface de chargement selon la revendication 1 ou 2, où l'entraînement est un entraînement mécanique, électromécanique, pneumatique ou hydraulique.

4. Surface de chargement selon la revendication 1, 2 ou 3, où la première ou la deuxième paire d'éléments de coulisse sont disposés sur une roue (11) reliée avec l'entraînement.

5. Surface de chargement selon une des revendications précédentes, où l'élément d'entraînement est une roue dentée.

6. Surface de chargement selon une des revendications précédentes, où la première paire d'éléments de coulisse et la deuxième paire d'éléments de coulisse sont espacées d'un montant d'à peu près ,2 à 0,4 fois la longueur de la surface de chargement en direction de retrait.

7. Dispositif de chargement pour un véhicule automobile (1) avec une chambre de chargement (4) avec deux parois latérales pour limiter la chambre de chargement et avec une surface de chargement (10) selon une des revendications précédentes 1 à 6 et avec des éléments de guidage (6, 7, 8) pour lever et retirer la surface de chargement (10).

8. Dispositif de chargement selon la revendication 7, où les éléments de guidage sont disposés sur ou dans les parois latérales de manière à ce qu'ils se trouvent lors d'une surface de chargement rentrée essentiellement au dessus du côté inférieur de la surface de chargement.

9. Dispositif de chargement selon la revendication 7 ou 8, où à chaque fois une conduite à coulisses (6, 7, 8) est réalisée au moyen des éléments de guidage dans les parois latérales.

10. Dispositif de chargement selon la revendication 9, où les conduites à coulisses comportent premiers tronçons à coulisses (6) pour recevoir une première paire (13) d'élément de coulisses de la surface de chargement et deuxième tronçons à coulisses (7) pour recevoir une deuxième paire (13) d'élément de coulisses de la surface de chargement et troisième tronçons à coulisses (8) pour recevoir la première et la deuxième paire d'éléments de coulisses, où les premiers et deuxièmes tronçons à coulisses servent essentiellement à soulever la surface de chargement et le troisième tronçon à coulisses sert essentiellement pour retirer la surface de chargement.

11. Dispositif de chargement selon la revendication 10, où les premiers et deuxièmes tronçons à coulisses sont espacées d'un montant d'à peu près ,2 à 0,4 fois la longueur de la surface de chargement l'un par rapport à l'autre.

12. Dispositif de chargement selon la revendication 10 ou 11, où au moins un des premiers et deuxièmes tronçons à coulisses présente une zone avec une tige dentée.

13. Dispositif de chargement selon une des revendications 7 à 12 avec des moyens (20) pour un arrêt susceptible d'être relâché de la surface de chargement dans sa position retirée.

14. Dispositif de chargement selon la revendication 13, où les moyens pour un arrêt susceptible d'être relacé sont dosés sur un bord de chargement (5).
